(19) Europäisches Patentamt / European Patent Office / Office européen des brevets

(11) **EP 1 863 279 A2**

(12) **EUROPEAN PATENT APPLICATION**

(43) Date of publication:
**05.12.2007 Bulletin 2007/49**

(51) Int Cl.:
***H04N 5/913*** *(2006.01)*

(21) Application number: **07108857.9**

(22) Date of filing: **24.05.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventors:<br>• **Morvan, Patrick**<br>  **92648 BOULOGNE CEDEX (FR)**<br>• **Blonde, Laurent**<br>  **92648 BOULOGNE CEDEX (FR)**<br>• **Bourdon, Pascal**<br>  **92648 BOULOGNE CEDEX (FR)** |
| (30) Priority: **31.05.2006 FR 0651977** | (74) Representative: **Le Dantec, Claude** |
| (71) Applicant: **Thomson Licensing**<br>  **92100 Boulogne-Billancourt (FR)** | **46, Quai Alphonse Le Gallo**<br>  **92100 Boulogne-Billancourt (FR)** |

(54) **Method and device for displaying a sequence of images**

(57)     The present invention relates to a method and a device for displaying a sequence of images that makes it possible to prevent any unauthorized copying of the latter. It applies to any type of digital display device comprising a matrix of light cells comprising a number of rows and/or columns of cells greater than the number of rows and/or of columns of pixels of the images to be displayed. According to the invention, to disrupt the illegal copying of sequences of images in cinema auditoria, it is proposed to modify the frame frequency of the displayed images by varying the number of rows and/or columns of cells addressed with a black level for at least two images of the sequence.

FIG.3

**EP 1 863 279 A2**

**Description**

The present invention relates to a method and a device for displaying a sequence of images making it possible to prevent any unauthorized copying of the latter. It applies to any type of video projection or digital display device comprising a matrix of light cells organized in rows and columns, each light cell being intended to display an image pixel. These devices are used to display images comprising a number of rows and/or of columns of pixels less than the number of rows and/or columns of light cells in the matrix.

For several years now, cinema producers have suffered from the circulation and distribution of illegal copies of their films. These copies are often copies made in cinema auditoriums using a camcorder.

To prevent the illegal copying of the film, a method of varying the frame frequency of the images displayed by the projector on the cinema screen is known from patent application WO 99/67950. The camcorder that illegally captures the projected images on video at a constant frame frequency is then disrupted and plays back an unsynchronized image that is therefore unusable. The pirate must then manually or automatically resynchronize the camcorder to obtain a good playback of the images and, if the frame frequency of the projector varies frequently, the pirate usually does not have time to resynchronize the camcorder. This becomes all the more difficult for him if the frame frequency varies randomly. Varying the frame frequency has until now been achieved by varying the line frequency or the pixel frequency in the display device.

The range of variation of the frame frequency can then be restricted because the increasing of the pixel frequency or of the line frequency is limited by the maximum operating frequency supported by the display device.

The invention proposes a solution which makes it possible to vary the frame frequency in a different way.

According to the invention, it is proposed to vary the frame frequency of the images displayed by varying, for at least two consecutive images, the number of rows and/or columns of light cells addressed with a black level. In practice, when an image is displayed on the screen of a display device, normally not all the cells of the screen are used to display this image; some rows and/or columns of the screen are addressed with a black level. Take, for example, the case of a 4/3 format matrix of light cells in which a 16/9 format image is displayed. This format difference leads to the appearance of black lines at the top and bottom of the image. According to the invention, this number is varied for at least two images of the sequence. This variation in the number of black lines, preferably in the bottom part of the image, makes it possible to vary the frame frequency.

More specifically, the present invention relates to a method of displaying a sequence of images in a display device comprising at least one matrix of light cells organized in rows and columns, each light cell being intended each to display, for each image, an image pixel, each image to be displayed comprising a number of rows and/or of columns of pixels less than the number of rows and/or columns of light cells of the matrix, in which, to display an image, rows and/or columns of light cells of the matrix, the number of which corresponds to the number of rows and/or columns of pixels of the image to be displayed, are addressed with the video data of the corresponding pixels of said image, at least one other row and/or column of light cells of the matrix being addressed with a black level. According to the invention, the number of rows of light cells addressed with a black level is different for at least two images of said sequence. According to a first variant, the number of columns of light cells addressed with a black level is different for at least two images of said sequence. According to another variant, the number of rows and columns of light cells addressed with a black level is different for at least two images of said sequence.

Thus, the number of light cells addressed is varied for a plurality of images, which makes it possible to vary the matrix addressing time and, in this way, vary the frame period needed to display these images.

According to one particular embodiment, the number of rows and/or columns of light cells addressed with a black level changes with each image of the sequence.

According to another embodiment as a variant, the number of rows and/or columns of light cells addressed with a black level changes at regular intervals every n images, n being greater than or equal to 2.

According to another embodiment as a variant, the number of rows and/or columns of light cells addressed with a black level changes every m images, m varying randomly.

Advantageously, the number of rows and/or columns of light cells addressed with a black level changes pseudo-randomly with each image.

According to one particular characteristic, the number of rows of light cells addressed with a black level is different for at least two images of said sequence and this change is obtained by eliminating the addressing with a black level of rows of light cells placed after the cells addressed with video data.

The invention also relates to a device for displaying a sequence of images comprising

- at least one matrix of light cells organized in rows and columns, for displaying the pixels of said images, each light cell being intended each to display an image pixel and each image to be displayed comprising a number of rows and/or of columns of pixels less than the number of rows and/or columns of light cells of the matrix,
- a memory for storing at least one image of the sequence to be displayed,

- a control circuit for addressing the rows and/or columns of light cells of the matrix, corresponding, in number terms, to the number of rows and/or columns of pixels of the image to be displayed with the video data of the pixels of said image stored in said memory and addressing at least one other row and/or column of light cells of the matrix with a black level.

According to the invention, the control circuit is able to address a different number of rows of light cells with a black level for at least two images of said sequence. According to a first variant, the control circuit addresses, for at least two images of said sequence, a different number of columns of light cells with a black level. According to another variant, the control circuit addresses, for at least two images of said sequence, a different number of rows and columns of light cells with a black level.

The invention will be better understood from reading the description that follows, given by way of nonlimiting example, and with reference to the appended drawings, in which:

- Figure 1 diagrammatically represents the addressing space of the matrix of light cells of a display device according to an addressing method known per se;
- Figure 2, to be compared with Figure 1, diagrammatically represents the addressing space of the matrix of light cells of a display device according to the invention;
- Figure 3 is a flow diagram representing a first embodiment of the inventive method in which the number of rows of cells addressed is different for at least two images of the sequence to be displayed;
- Figure 4 is a flow diagram representing a second embodiment of the inventive method in which the number of columns of cells addressed is different for at least two images of the sequence to be displayed;
- Figure 5 is a flow diagram representing a third embodiment of the method of the invention in which the number of rows and columns of cells addressed is different for at least two images of the sequence to be displayed;
- Figures 6 and 7 diagrammatically represent first and second display devices implementing the inventive method; and
- Figure 8 diagrammatically represents a display system according to the invention able to display encrypted and compressed video streams.

The invention is implemented in a display device comprising a matrix of light cells organized in rows and columns. The number of rows and/or of columns of light cells of the matrix is greater than the number of rows and/or of columns of pixels in the images to be displayed. The table below gives a few examples of matrix size and image size that can be displayed by this matrix.

| Matrix size expressed by number of rows x number of light cells per row | Image size expressed by number of rows x number of pixels per row |
| --- | --- |
| 1050 x 1400 (4/3) | - 720 x 1280 (HDTV - 16/9) |
| 1024 x 1280 (5/4) | - 720 x 1280 (HDTV - 16/9) |

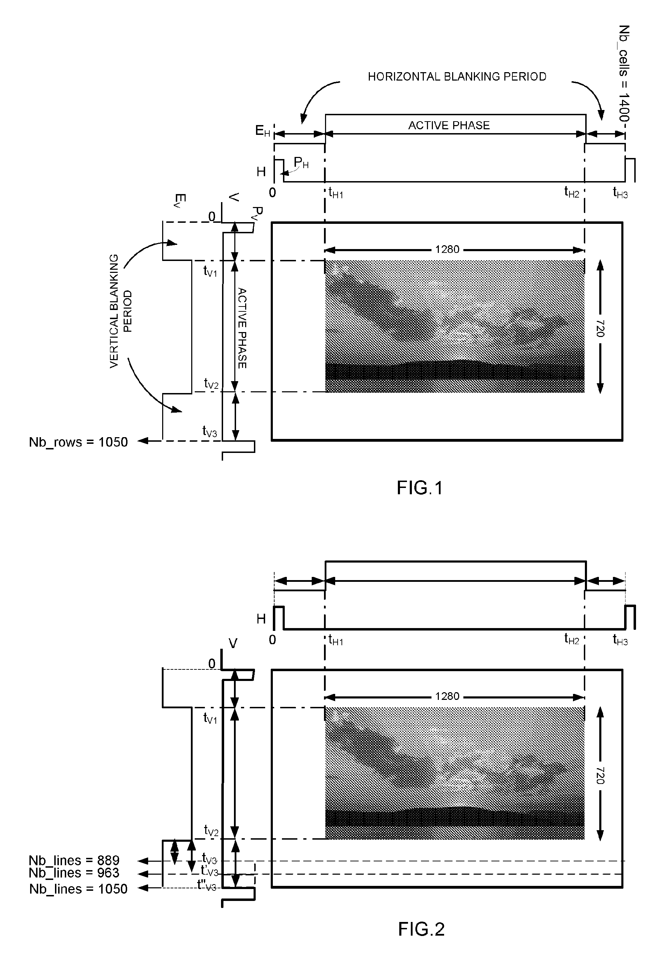

Figure 1 illustrates the addressing of the light cells of a matrix comprising 1050 rows of 1400 light cells each. Each image of 720 x 1280 pixels is displayed in this matrix. This figure shows more particularly the addressing space of the cells of the matrix and the addressing space occupied by the image to be displayed in the matrix addressing space. The matrix addressing space is expressed by number of rows and columns of light cells and is represented in the figure by a rectangle with a width of 1050 rows of cells and a length of 1400 columns of cells. The addressing space occupied by the image is expressed by number of rows and columns of pixels and is represented by a rectangle of 720 rows of pixels x 1280 columns of pixels. Each pixel of the image is displayed by a light cell of the matrix. This figure also shows horizontal and vertical synchronization signals, respectively H and V, on which are synchronized the signals employed to address the cells of the matrix. This figure also represents signals $E_H$ and $E_V$ which indicate the periods during which the cells of the matrix are addressed with video data (or pixels) of the video image to be displayed. More particularly, cells of the matrix are addressed with video data of the image to be displayed when the two signals $E_H$ and $E_V$ are in the high state and, otherwise, they are addressed with a video level corresponding to a black level. The term "black level" should be understood to mean an image signal level corresponding to a pixel addressed by a minimal input signal, generally a pixel of zero luminance or, at the very least, minimal luminance. The periods when the cells of the matrix are addressed with a black level are conventionally called vertical blanking periods (signal $E_V$ in the low state) and horizontal blanking periods (signal $E_H$ in the low state).

If Figure 1 is described in more detail, the horizontal synchronization signal H is a periodic signal comprising a pulse $P_H$ at the start of a period. Each period comprises a display phase called active phase during which a line of the image is addressed and two horizontal blanking periods located either side of the active phase. The pulse $P_H$ is placed at the start of the horizontal blanking period located before the active phase. In the example of Figure 1, the two horizontal blanking periods are performed during the time intervals [O,$t_{H1}$] and [$t_{H2}$,$t_{H3}$] and the active phase is applied during the time interval [$t_{H1}$,$t_{H2}$]. During the active phase [$t_{H1}$,$t_{H2}$], 1280 cells of the matrix are addressed to display the 1280 pixels of an image line. The 120 (=1400-1280) other cells of the row of cells of the matrix are addressed with a black level

In the same way, the vertical synchronization signal V is a periodic signal and each of these periods comprises a display phase called active phase during which an entire image is addressed in the matrix and two vertical blanking phases located either side of this active phase. In the example of Figure 2, the two vertical blanking phases are performed during the time intervals [0,$t_{V1}$] and [$t_{V2}$, $t_{V3}$] and the active phase is applied during the time interval [$t_{V1}$,$t_{V2}$]. Although this is not shown in the figure in the interests of clarity, each period of the signal V comprises 1050 periods of the signal H. During the active phase [$t_{V1}$,$t_{V2}$], 720 rows of the matrix are addressed to display the 720 lines of an image. In the matrix, the 330 (=1050-720) other rows of cells are addressed with a black level.

As specified previously, the invention proposes a novel method for varying the frame frequency of the image display device. The frame frequency FT can be defined by the following formula:

$$FT = \frac{pixel\ frequency}{number\ of\ columns \times number\ of\ rows\ of\ cells\ addressed}$$

According to the invention, it is proposed to vary the frame frequency by varying the number of rows and/or of columns of cells addressed in the matrix and, more particularly, by varying the number of rows and/or columns of cells addressed with a black level so as not to modify the resolution of the image displayed. For this, the size of the vertical and/or horizontal blanking zone of the control signals of the light cells is varied.

The table below indicates the total number of rows of cells to be addressed in the matrix to obtain a frame frequency between 44 Hz and 52 Hz. To obtain these values, it was assumed that the pixel frequency was constant and equal to 65 MHz.

| Frame frequency (Hz) | Pixel frequency (MHz) | Number of rows addressed | Number of columns addressed |
|---|---|---|---|
| 44 | 65 | 1050 | 1400 |
| 45 | 65 | 1027 | 1400 |
| 46 | 65 | 1005 | 1400 |
| 47 | 65 | 983 | 1400 |
| 48 | 65 | 963 | 1400 |
| 49 | 65 | 943 | 1400 |
| 50 | 65 | 924 | 1400 |
| 51 | 65 | 906 | 1400 |
| 52 | 65 | 889 | 1400 |

In this table, the frame frequency variation interval is 1 Hz and the variation range is [44 Hz, 52 Hz].

Another table is given below in which the frame frequency variation interval (0.5 Hz) and the variation range [46 Hz, 50 Hz] are smaller.

| Frame frequency (Hz) | Pixel frequency (MHz) | Number of rows addressed | Number of columns addressed |
|---|---|---|---|
| 46 | 65 | 1005 | 1400 |
| 46.5 | 65 | 994 | 1400 |
| 47 | 65 | 983 | 1400 |
| 47.5 | 65 | 973 | 1400 |
| 48 | 65 | 963 | 1400 |
| 48.5 | 65 | 953 | 1400 |

(continued)

| Frame frequency (Hz) | Pixel frequency (MHz) | Number of rows addressed | Number of columns addressed |
|---|---|---|---|
| 49 | 65 | 943 | 1400 |
| 49.5 | 65 | 934 | 1400 |
| 50 | 65 | 924 | 1400 |

Addressing 1050 rows of the matrix to display an image of 720x1280 pixels amounts to addressing 720 rows of the matrix with the video data of the image and 330 rows with a black level.

Similarly, addressing 963 rows of the matrix to display an image of 720x1280 pixels amounts to addressing 720 rows of the matrix with the video data of the image and 243 rows with a black level.

As a general rule, addressing X rows of the matrix to display an image of 720x1280 pixels amounts to addressing 720 rows of the matrix with the video data of the image and X-720 rows with a black level.

Figure 2, to be compared with Figure 1, shows a first case where 1050 rows of cells of the matrix are addressed (the end of the vertical blanking period located after the active phase corresponds to the moment $t_{V3}$), a second case where 963 rows of cells of the matrix are addressed (the end of the vertical blanking period located after the active phase corresponds to the moment $t'_{V3}$) and a third case where 889 rows of cells of the matrix are addressed (the end of the vertical blanking period located after the active phase corresponds to the moment $t''_{V3}$).

This is not shown here, but obviously, instead of varying the number of rows of cells addressed with a black level, it is also possible to vary the number of columns of cells addressed with a black level.

According to another embodiment, it is also possible to vary both the number of rows and the number of columns of cells addressed with a level.

According to one particular embodiment, the number of rows and/or columns of light cells addressed with a black level varies with each image of the sequence. This number of rows and/or columns can vary alternately between two numbers, for example 1050 rows addressed for a first image, 889 rows addressed for the next image, then again 1050 rows addressed, then again 889 rows addressed, and so on. This number can be different with each image, for example 1050 rows, then 889 rows, then 963 rows, then 1005 rows, and so on.

According to another embodiment as a variant, the number of rows and/or columns of light cells addressed with a black level varies at regular intervals every n images, n being greater than or equal to 2.

According to another embodiment as a variant, the number of rows and/or columns of light cells addressed with a black level varies every m images, m varying randomly.

Advantageously, the number of rows and/or columns of light cells addressed with a black level varies pseudo-randomly with each image.

According to a particular characteristic, the rows and/or columns of light cells addressed with a black level for which the number varies are the rows and/or columns of light cells addressed with a black level that are addressed after the cells addressed with the video data.

Obviously, although this does not appear in the previous tables, it is possible to generate non-integer frame frequency values. Only the number of rows must be an integer number to implement the method.

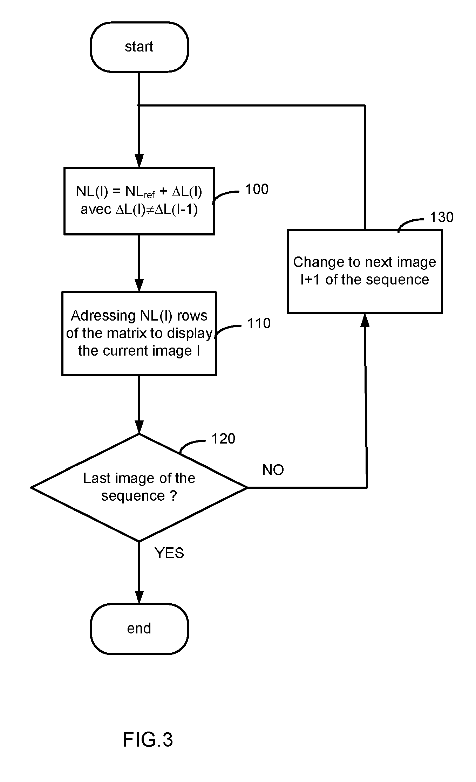

Figure 3 is a flow diagram illustrating a first method of addressing the cells of the display device according to the invention in which the number of rows of cells addressed is varied with each image of the sequence. In the step 100, for each current image I of the sequence, a number of rows of cells NL(I) to be addressed is computed. This number is equal to the sum of a fixed number of rows $NL_{ref}$ and a variable number of rows $\Delta L(I)$. The variable number $\Delta L(I)$ is different from that $\Delta L(I-1)$ used for the preceding image I-1. As indicated previously, the number $\Delta L$ can vary pseudo-randomly with each image. A number NL(I) of rows of cells of the matrix is then addressed to display the current image I (step 110). If the image I is not the last image of the sequence to be displayed (step 120), the method goes on to the next image I+1 (step 130) and the preceding steps are recommenced for the image I+1. The number $NL_{ref}$ is a minimum number and is, for example, equal to 889 rows. The variable number $\Delta L(I)$ is, for example, between 0 and 161 (=1050-889) if the maximum number of addressable rows is equal to 1050 rows as shown in Figure 2.

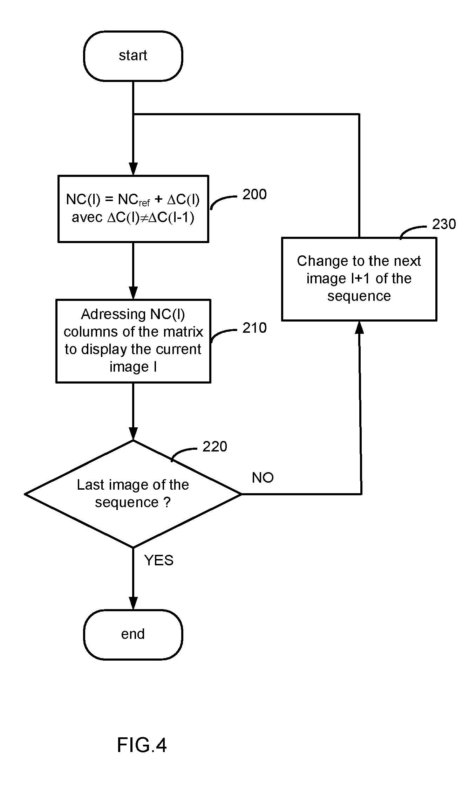

Figure 4 is a flow diagram illustrating a first method of addressing the cells of the display device according to the invention in which, with each image of the sequence, the number of columns of cells addressed is varied. In the step 200, for each current image I of the sequence, a number of columns of cells NC(I) to be addressed is computed. This number is equal to the sum of a fixed number of columns $NC_{ref}$ and a variable number of columns $\Delta C(I)$. The variable number $\Delta C(I)$ is different from that $\Delta C(I-1)$ used for the preceding image I-1. As indicated previously, the number $\Delta C$ can vary pseudo-randomly with each image. A number NC(I) of columns of cells of the matrix is then addressed to display the current image I (step 210). If the image I is not the last image of the sequence to be displayed (step 220), the method goes on to the next image I+1 (step 230) and the preceding steps are recommenced for the image I+1. The number $NC_{ref}$ is a minimum number and is, for example, equal to 1340 columns. The variable number $\Delta C(I)$ is, for example, between 0 and 60 (=1400-1340) if the maximum number of addressable columns is equal to 1400 columns as shown in Figure 2.

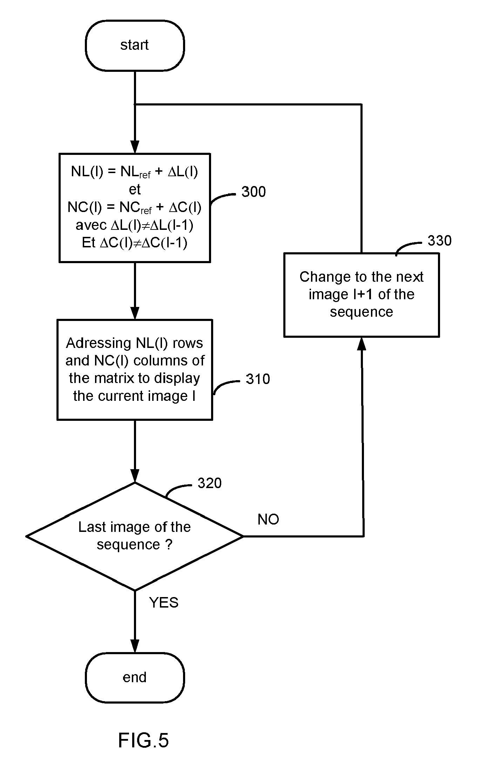

Moreover, Figure 5 is a flow diagram illustrating a first method of addressing the cells of the display device according to the invention in which, with each image of the sequence, the number of rows and columns of cells addressed is varied. In the step 300, for each current image I of the sequence, a number of rows of cells NL(I) and a number of columns of cells NC(I) to be addressed is computed. The number NL(I) is equal to the sum of a fixed number of rows $NL_{ref}$ and a variable number of rows $\Delta L(I)$. The variable number $\Delta L(I)$ is different from that $\Delta L(I-1)$ used for the preceding image I-1. The number NC(I) is equal to the sum of a fixed number of columns $NC_{ref}$ and a variable number of columns $\Delta C(I)$. The variable number $\Delta C(I)$ is different from that $\Delta C(I-1)$ used for the preceding image I-1. As indicated previously, the numbers $\Delta C$ and $\Delta I$ can vary pseudo-randomly with each image. A number of rows NL(I) and a number of columns NC(I) of cells of the matrix are then addressed to display the current image I (step 310). If the image I is not the last image of the sequence to be displayed (step 320), the method goes on to the next image I+1 (step 330) and the preceding steps are recommenced for the image I+1.

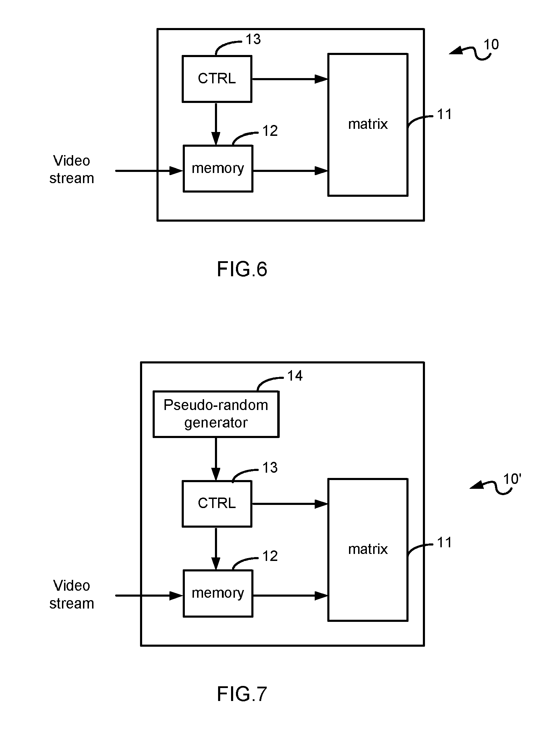

The inventive method is implemented in a display device as illustrated in Figure 6.

The display device 10 represented in Figure 3 comprises:

- a matrix 11 of light cells organized in rows and columns, each cell being intended to display an image pixel; the matrix comprises for example 1050x1400 light cells; it is, for example, a liquid crystal valve or a micromirror valve;
- a memory 12 receiving the video stream able to store at least one image contained in the video stream;
- a control circuit 13 for controlling the matrix 11 and the memory 12; this circuit controls the addressing of a part of the cells of the matrix with the video levels of the pixels of the image stored in the memory 12 and another part of the cells with a black level.

The inventive method as described previously, namely varying the number of light cells addressed in the matrix while displaying a sequence of images, is implemented by the control circuit 13. The circuit 13 is then designed to vary the synchronization signal or signals H and/or V of the matrix of light cells. The synchronization signals E and H to be varied are either generated by the control circuit 13, or generated by an external circuit.

Figure 7 represents a display device 10' comprising, in addition to the elements of the device 10 in Figure 3, a pseudo-random sequence generator 14 connected to the control circuit 13. The generator 14 produces a pseudo-random noise sequence which is used by the control circuit 13 to pseudo-randomly modify the synchronization signal or signals H and/or V of the matrix of light cells.

Obviously, the random noise sequence generator 14 can be incorporated in the control circuit 13. It can also be external to the display device 10 or 10'.

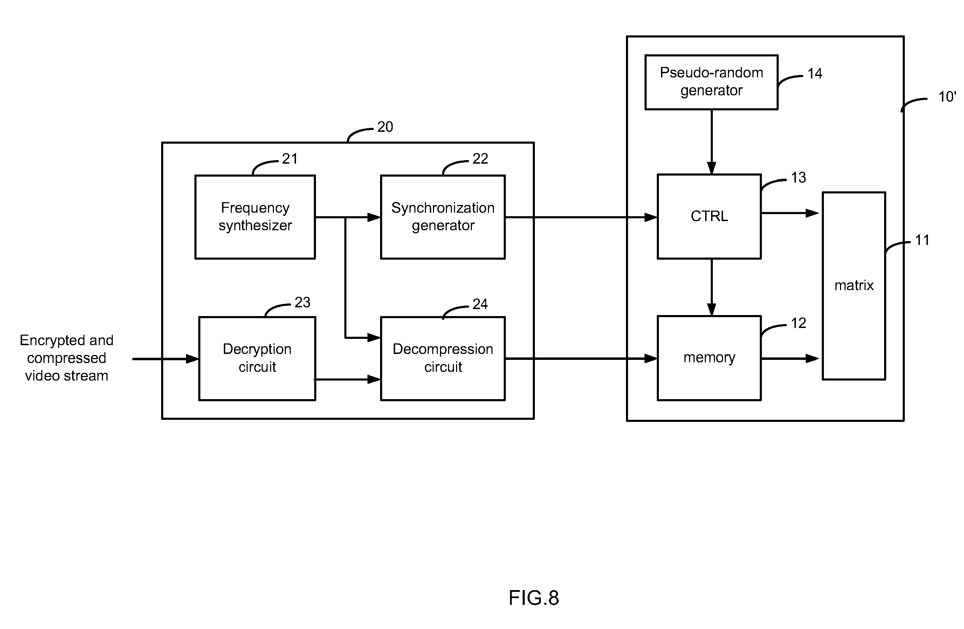

Figure 8 represents a display system able to process a video stream received in the form of an encrypted and compressed bit stream. This system comprises a display device 10' according to Figure 4 connected to a decoder 20. This decoder 20 comprises a frequency synthesizer 21 which delivers an electrical signal having a predetermined frequency, a synchronization generator 22 which delivers synchronization signals E and H from the signal originating from the frequency synthesizer 21. The decoder 16 also comprises a decryption circuit 23 and a decompression circuit 14 to decode the encrypted and compressed video stream. The decompression circuit 24 is synchronized by the signal delivered by the frequency synthesizer 21 and delivers a video signal representative of the images to be displayed on the display device 10 or 10'. Each of the elements represented in Figure 1 is well known to those skilled in the art. They are therefore not described in detail here. Moreover, the various elements described in these figures do not necessarily correspond to separate physical units.

Obviously, the invention is not limited to the embodiments described above.

In particular, those skilled in the art can apply the inventive method to display devices comprising a matrix of light cells with a different number of light cells or comprising several matrices of cells, one matrix for each colour, like, for example, the projectors 3-DLP, 3LCD or 3-LCOS conventionally used for digital cinema. Although this is not described, the invention can also be applied to display devices comprising a matrix of plasma cells or an LCOS, OLED or SED valve.

Nor is the invention limited to the matrix and image formats indicated in the description. It can be applied to any display device having a matrix of cells comprising a larger number of rows and/or columns of cells than there are rows and/or columns of pixels in the images to be displayed.

**Claims**

1. Method of displaying a sequence of images in a display device comprising at least one matrix of light cells organized in rows and columns, each light cell being intended to display, for each image, an image pixel, each image to be displayed comprising a number of rows and/or of columns of pixels less than the number of rows and/or columns of light cells of the matrix, in which, to display an image, rows and/or columns of light cells of the matrix, the number of which corresponds to the number of rows and/or columns of pixels of the image to be displayed, are addressed with the video data of the corresponding pixels of said image, at least one other row and/or column of light cells of the matrix being addressed with a black level,

**characterized in that** the number of rows and/or columns of light cells addressed with a black level is different for at least two images of said sequence.

2. Method according to Claim 1, in which the number of rows and/or columns of light cells addressed with a black level changes with each image of the sequence.

3. Method according to Claim 1, in which the number of rows and/or columns of light cells addressed with a black level changes at regular intervals every n images, n being greater than or equal to 2.

4. Method according to Claim 1, in which the number of rows and/or columns of light cells addressed with a black level changes every m images, m varying randomly.

5. Method according to one of the preceding claims, in which the number of rows and/or columns of light cells addressed with a black level changes pseudo-randomly with each image.

6. Method according to one of the preceding claims, in which the number of rows of light cells addressed with a black level is different for at least two images of said sequence and this change is obtained by eliminating the addressing with a black level of rows of light cells placed after the cells addressed with video data.

7. Device (10;10') for displaying a sequence of images comprising

   - at least one matrix (11) of light cells organized in rows and columns, for displaying the pixels of said images, each light cell being intended each to display an image pixel and each image to be displayed comprising a number of rows and/or of columns of pixels less than the number of rows and/or columns of light cells of the matrix,
   - a memory (12) for storing at least one image of the sequence to be displayed,
   - a control circuit (13) for addressing the rows and/or columns of light cells of the matrix, corresponding, in number terms, to the number of rows and/or columns of pixels of the image to be displayed with the video data of the pixels of said image stored in said memory and addressing at least one other row and/or column of light cells of the matrix with a black level,

   **characterized in that** the control circuit (13) is able to address a different number of rows and/or columns of light cells with a black level for at least two images of said sequence.

8. Device according to Claim 7, **characterized in that** it also comprises a random noise sequence generator (14) connected to the control circuit (13) to randomly vary the number of rows and/or columns of light cells addressed with a black level for at least two images of said sequence.

HORIZONTAL BLANKING PERIOD

ACTIVE PHASE

Nb_cells = 1400

$E_H$

$P_H$

H

0   $t_{H1}$   $t_{H2}$   $t_{H3}$

$E_V$

V

$P_V$

0

$t_{V1}$

VERTICAL BLANKING PERIOD

ACTIVE PHASE

$t_{V2}$

$t_{V3}$

Nb_rows = 1050

1280

720

FIG.1

H

0   $t_{H1}$   $t_{H2}$   $t_{H3}$

V

0

$t_{V1}$

$t_{V2}$

Nb_lines = 889    $t_{V3}$
Nb_lines = 963    $t'_{V3}$
Nb_lines = 1050   $t''_{V3}$

1280

720

FIG.2

FIG.3

start

NC(I) = NC$_{ref}$ + $\Delta$C(I)
avec $\Delta$C(I)$\neq\Delta$C(I-1)　— 200

Adressing NC(I)
columns of the matrix
to display the current
image I　— 210

— 230
Change to the next
image I+1 of the
sequence

— 220
Last image of the
sequence ?

NO

YES

end

FIG.4

start

$$NL(I) = NL_{ref} + \Delta L(I)$$
et
$$NC(I) = NC_{ref} + \Delta C(I)$$
avec $\Delta L(I) \neq \Delta L(I-1)$
Et $\Delta C(I) \neq \Delta C(I-1)$

300

Adressing NL(I) rows
and NC(I) columns of
the matrix to display
the current image I

310

330

Change to the next
image I+1 of the
sequence

320

Last image of the
sequence ?

NO

YES

end

FIG.5

FIG.6

FIG.7

FIG.8

EP 1 863 279 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9967950 A